# EUROPEAN PATENT APPLICATION

(11) **EP 2 080 973 A1**
(43) Date of publication of application: **22.07.2009**
(21) Application number: 08305003.9
(22) Date of filing: 10.01.2008
(51) Int. Cl.: F27B 7/34, F27B 7/42, F27D 23/00, F23D 14/84

(54) **Rotary furnaces**

(71) Applicant: L'AIR LIQUIDE, Société Anonyme pour l'Etude et l'Exploitation des Procédés Georges Claude, 75007 Paris (FR)
(72) Inventor: Labegorre, Bernard, 75015 Paris (FR); Ougarane, Lahcen, 31270 Cugnaux (FR)
(74) Representative: De Vleeschauwer, Natalie Y.L.D.

(57) **Abstract**

According to the present invention, there is provided a rotary furnace 10 comprising a rotatably mounted tumbler heating drum 12, preferably disposed substantially horizontally. The rotatable drum 12 is for holding a load 4 to be heated, such as non-ferrous metal for recycling or granular material such as chalk or cement for calcinations. A burner assembly 2 is provided in the region of one end of the rotatable drum 12, for supplying a burner flame 24 into the drum for use in heating the load 4. The burner optionally includes an oxidant lance 18 and is characterized in that means 26, 28 are provided for varying the aim and/or opening of the burner flame 24 and/or of an oxidant jet 22 if the furnace is equipped with an oxidant lance 18.

## Description

The present invention relates to rotary furnaces and in particular to a rotary furnace that incorporates a burner and/or an oxidant lance directed into it.

Rotary furnaces are currently in common use for calcination of granular matter in the chalk industry, cement manufacture, and the like, for the production of enamel and they are also used in the recycling of non-ferrous metals such as aluminium.

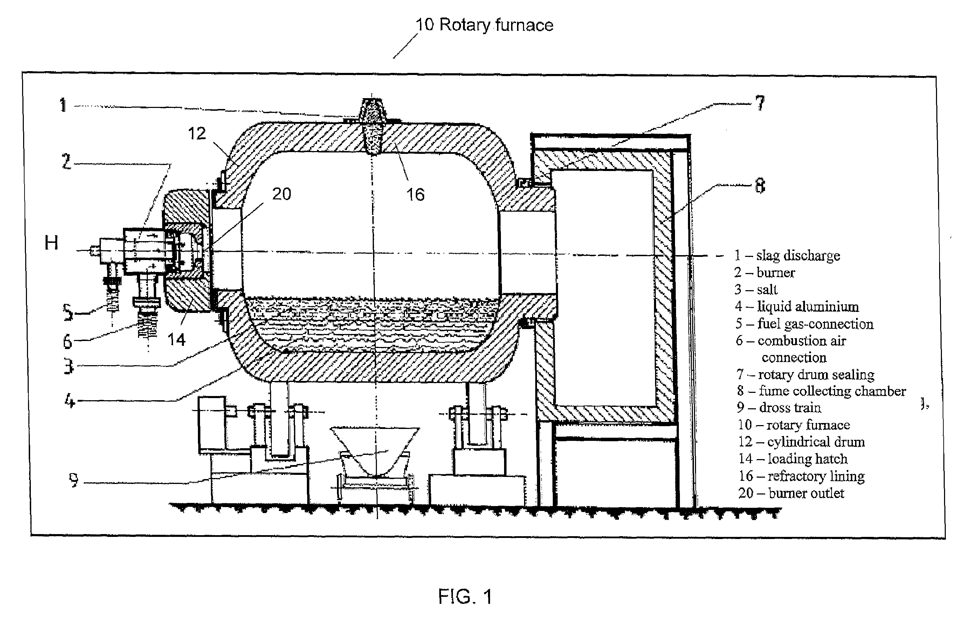

A general layout applicable for a rotary furnace 10 can be seen in Figure 1, in this example for recycling aluminium, in which a cylindrical tumbler drum 12 is rotated during a heating cycle about a substantially horizontal axis H and the furnace 10 is configured for operation either continuously or cyclically.

The axis of rotation H is illustrated horizontally in this example, which provides a flat pool of salt 3 over liquid aluminium 4 after heating has started. A slag discharge 1 is positioned centrally along the drum wall and is illustrated at the top of the present rotation, but is intended for discharge into a dross train 9 when the drum 12 is stopped with the slag discharge 1 at the bottom.

A burner assembly 2 is incorporated into a charge loading hatch 14, which is mounted towards one end of the drum 12. The burner assembly 2 includes a fuel connection 5, in this case in the form of a fuel gas connection, and an oxidant connection 6, in this case in the form of a combustion air connection.

It will be appreciated that, although the drum rotation axis H is illustrated in the horizontal plane, the drum rotation axis H may be inclined. The drum axis H could be inclined slightly downwards away from the burner assembly 2. In that case, as load 4 such as scrap aluminium is loaded into the drum 12 through the hatch 14 and is melted, the load 4 would run down away from the burner assembly 2 towards the lower end of the drum 12.

The burner assembly 2 combines the fuel 5, in this case a fuel gas, and the oxidant 6 and by combustion of the fuel 5 with the oxidant 6 supplies a flame through a burner outlet 20 into the drum 12 for heating a load, and in particular for fusion of a metal or non-metal (e.g. enamel fusion) load 4, or for calcination of a granular load 4 as the case may be.

The transfer of energy to the load 4 may take place directly by radiation or convection. It may equally be transferred indirectly, through conduction of energy that has first been stored in the wall of the drum 12 and then moved into contact with the load 4 by rotation of the drum 12. The inner surface of the drum 12 may usefully be coated with a refractory lining 16.

The end of the rotary drum 12 opposite to the burner assembly 2 is open along the axis of rotation H and is connected in a sealed manner 7 to a fume collecting chamber 8, via which exhaust gases are gathered.

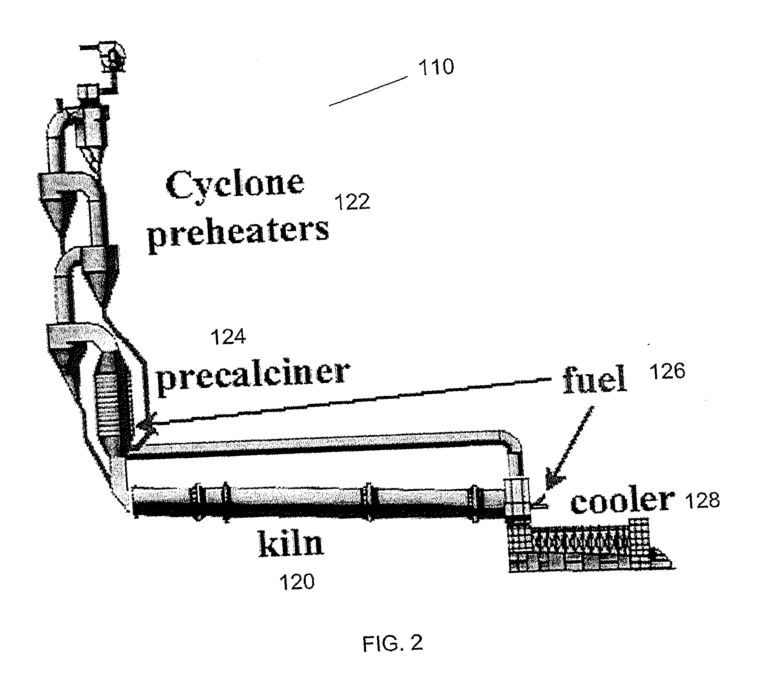

A possible installation 100 comprising a rotary furnace 120 used for a granular load 4, such as klinker/cement or chalk, is illustrated in Figure 2. In this case, the rotary furnace (kiln 120) is preceded by a series of pre-chambers 122, 124 including one or more cyclone preheaters 122 and one or more precalciners 124. Fuel 126 is added into a precalciner 124 and at the lower end of the downward sloping kiln 120 before it eventually discharges into a cooler 128. A prior art system of this general type is proposed in EP-A1-0882687.

In both cases, energy is transferred into the load 4 both directly by radiation and convection, but also indirectly by conduction of energy that has first been transferred into the wall of the rotary drum 12, 120 (for example into the refractory lining 16 thereof) and then brought into contact with the load 4 by rotation of the drum 12, 120.

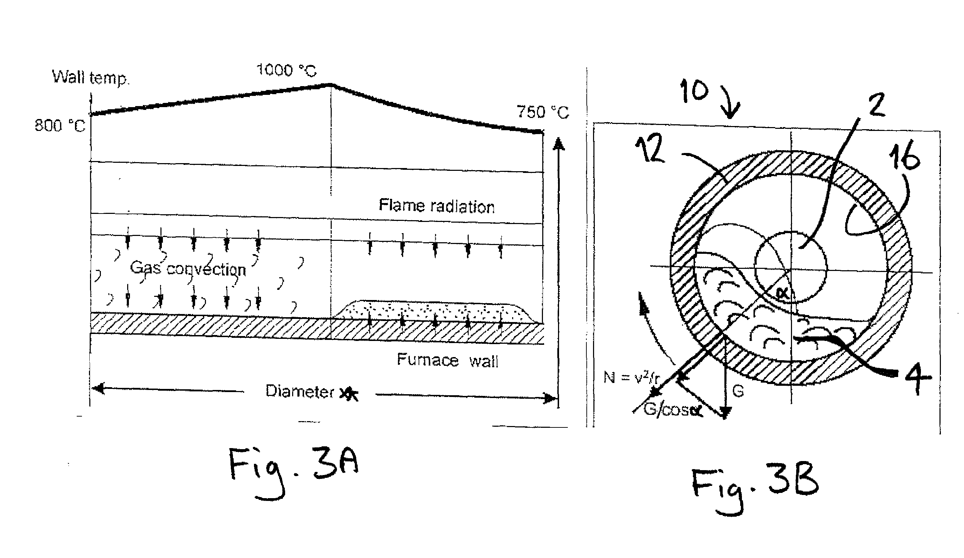

The mechanisms by which thermal energy is transferred into the load in a rotary furnace 12, 120 are illustrated in Figure 3A and Figure 3B. Figure 3A shows the temperature profile around the rotary drum wall, represented as if unrolled during a heating process or cycle. Figure 3B shows how the load in a rotary drum 12 tends to accumulate off-set from the vertical during a heating process or cycle, by which it might be said to climb the drum inner circumference in the direction of rotation. In Figure 3B G is gravitational force, α is the angle by which the load is off-set from the vertical, N is the centrifugal force, V is the speed of rotation and r is the inner radius of the drum.

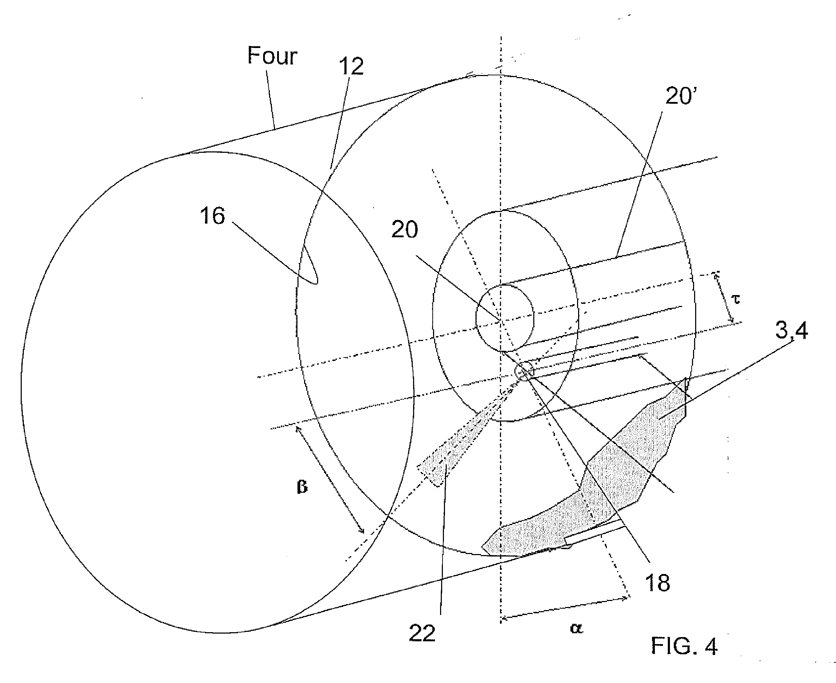

Referring now also to Figure 4, the burner assemblies 2 in certain furnaces are further equipped with an oxidant lance 18 in addition to a burner 20', the oxidant lance 18 enabling the doping of the burner performance and thus increasing the production capacity of the furnace 10 as a whole. The oxidant lance 18 is in general positioned in between the burner outlet 20 and the load 4. The oxidant jet 22 is often angled towards the load 4, e.g. by the angle β in Figure 4, so as to maximise the thermal transfer. Further consideration must be taken of the tendency of the load to roll around, i.e. during a heating cycle, towards an angle of for example 45° with respect to the horizontal and which roll is in the direction of rotation of the drum 12, 120. A structure of this general type may be observed in our patent US-6039786, concerning in that case the melting of a metal load.

Whilst even some current rotary furnaces, such at the one disclosed in US-6039786, do achieve good thermal performance and excellent productivity with respect to static installations, there are certain limitations. Amongst the more serious problems is the tendency to form hot-spots, both within the load 4 itself and within the refractory lining 16. These problems arise at least partially because of the continuous redistribution of the load 4 (and salt 3 as the case may be), from the very nature of the rotation of the drum 12, 120, but also because of the fixed position of the burner 2, 20 flame and/or oxidant lance 18 jet and the confined space in which all of this is housed and operated.

There is therefore a continuing need in the art to improve rotary furnaces 10, 100 and in particular to try and address the problem of overheating or hot-spot formation in the refractory lining 16, the drum material and even in the load 4 itself.

One possibility is to periodically limit the power output by the burner 2 or the oxidant jet 22 of lance 20 and it might even prove necessary to interrupt or suspend the burner flame itself altogether. Such an approach does, however, result in a *de facto* reduction in productivity because the process of heating and therefore of calcination/fusion would be slowed down or even stopped during these interruptions.

Another option would be to physically alter the position and/or inclination of burner 2 flame in a fixed position for a given cycle, so as to optimise the thermal performance for said specific cycle. For example, provided overheating of the drum wall or lining is not a problem, the burner flame could in some applications be inclined towards an upper region of the drum 12, 120 so as to provide a predictable transfer of energy by conduction, whilst at the same time reducing the likelihood of forming hot-spots in the load 3, 4. Furthermore, such an approach would also help avoid direct impingement between the by-products of combustion in the region of the burner flame and the hot load, thereby limiting oxidation of the load 4. This idea might well adapt the furnace 12, 120 to a particular operating cycle of the furnace 12, 120, but this idea would also necessitate cooling down the furnace 12, 120 by stopping its operation so as to access the burner 2 for each change of cycle parameters or batch of load 4 to which it would be necessary to adapt the burner flame. .

It is also possible to try and limit the formation of hot-spots by optimising the position and angle of injection of the oxidant jet 22. This situation is illustrated in Figure 4, in which the oxidant lance 18 directs the oxidant jet 22 down towards the load 3, 4 at an angle of β. Such an approach of fixed lance jet position and angle is, however, only adapted for a single set of operating conditions and would require intervention within the furnace 12, 120, for example by physically changing the direction of the oxidant lance 18 to alter its injection angle β. This idea might well adapt the furnace 12, 120 to a particular operating cycle, but would necessitate cooling down the furnace 12, 120 by stopping its operation so as to access the lance 18 for each change of cycle or batch of load 4 to which it would be necessary to adapt the oxidant lance 18.

It can be noted that in each of the above cases the control is static, as a consequence of which there can be no adaptation to a change in the operating conditions of the furnace 10 during a cycle or process, for example to adapt to a change in the load 4 or in the speed of rotation of the drum 12,120 as it happens. It is also difficult to regulate the position and/or inclination of the flame and the position and/or inclination of the oxidant jet 22 during the progress of a heating cycle or process, in particular a fusion/calcination cycle, during a rotation of the drum. Problems therefore arise with hot-spot formation, the quality of the product, the productivity of the system and also with drift due to the ageing of the equipment.

It is an object of the present invention to provide an improved rotary furnace arrangement.

According to the present invention, there is provided a furnace comprising a rotatably mounted tumbler heating drum, preferably substantially horizontal, suitable for containing a load of material to be heated, means for rotating said drum and a burner arrangement in the region of one end of said drum for supplying a flame into said drum for use in heating said load, said burner comprising a burner and/or an oxidant lance.

The present invention is characterised in that said burner arrangement further comprises means for varying the direction and/or opening of a burner flame produced by the burner and/or of an oxidant jet produced by the oxidant lance.

In this manner, the present invention provides improved control of where and when heat is supplied to the load and also to the refractory lining of a rotary furnace. That helps reduce the likelihood of hot-spot formation and the increase in cycle control benefits productivity of the process and longevity of the equipment.

The term "opening" of a flame or of a jet is understood to mean the angle between the longitudinal axis of the jet or flame and the generatrix of the outer surface of the flame or jet.

The direction of said burner flame and/or oxidant jet may be variable in use along the length of said rotatable drum. This enables even heating of the load or of the refractory lining, further improving resistance to hot-spot formation.

The direction of said burner flame and/or oxidant jet may be variable in use radially within said rotatable drum. This allows the equipment and process to adapt in real time to the tendency of the load to accumulate at a position off-set from the vertical and in the direction of rotation of the drum.

Said varying means may be mechanical means varying the direction and/or opening of said burner flame and or oxidant jets, such as pivots for pivoting the burner or burner nozzle and/or the oxidant lance or oxidant lance nozzle and variable nozzles for varying the opening of said burner flame and/or oxidant jet. A disadvantage of such mechanical means is that its durability is very limited in harsh environments, for example in the case of calcination processes and metal or enamel melting processes. Indeed, a mechanical means is prone to failure in high temperature environments, environments with a corrosive and/or highly polluted atmosphere.

Therefore, the varying means is preferably non-mechanical means. In that case, the varying means advantageously varies the direction of the burner flame and/or oxidant jet by fluid interaction with one or more fluid jets, also referred to as actuating jet, said fluid jet being typically a gaseous jet.

Said varying means may comprise one or more fluid jets configured to impact a main jet of fuel, of oxidant or of a mixture of fuel and oxidant injected by the burner for combustion in the furnace, so as to vary thereby the direction and/or opening of said main jet and thereby of said burner flame.

Said varying means may likewise comprise one or more fluid jets configured to impact the oxidant jet so as to vary the direction and/or opening of said oxidant jet.

The use of one or more fluid jets to vary the direction and/or opening of a burner flame and corresponding burner constructions are described in the applicant's patent applications FR-A-2903325 and PCT/FR2007/051597.

For example, the burner may comprise:
● an injection channel for injecting a main jet of fuel, of oxidant or of a mixture of fuel and oxidant and
● at least one injector for injecting one or more actuating jets into said injection channel or in the vicinity of the outlet of said injection channel.

Similarly, the oxidant lance may comprise:
● an injection channel for injecting a main jet, the main jet being in this case the oxidant jet and
● at least one injector for injecting one or more actuating jets into said injection channel or in the vicinity of the outlet of said injection channel.

The injection channel and the injector are positioned with respect to one another in such a way that the actuating jet or jets impact the main jet, thereby enabling a variation of the direction and/or opening of the resulting main jet by fluid interaction with said one or more actuating jets.

The injection channel and the injector(s) are preferably positioned with respect to one another in such a way that the actuating jet or jets impact the main jet with an angle α greater than 0° and smaller than or equal to 90°, preferably between 45° and 90°, more preferably between 60° and 90°, a substantially perpendicular orientation (α +/- = 90°) being particularly preferred).

The one or more actuating jets preferably impact the main jet within the injection channel, that is: upstream of the outlet opening of said injection channel.

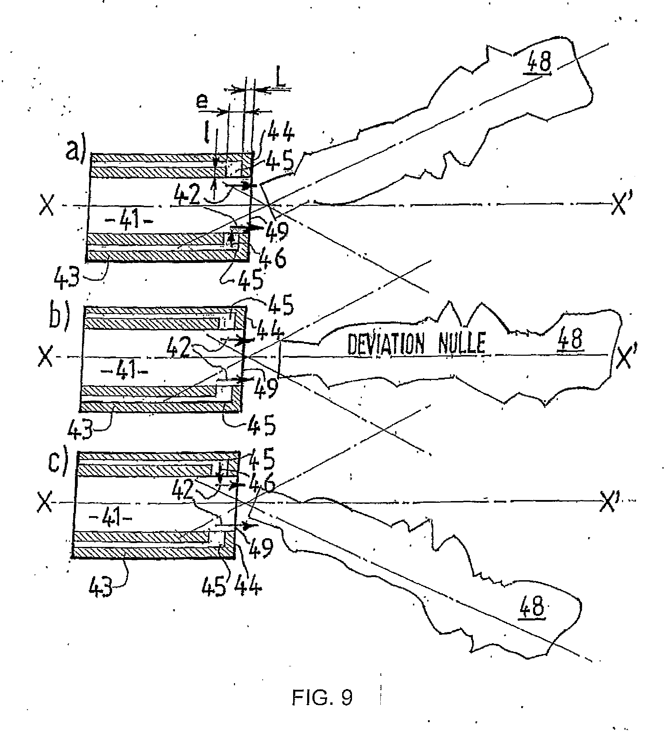

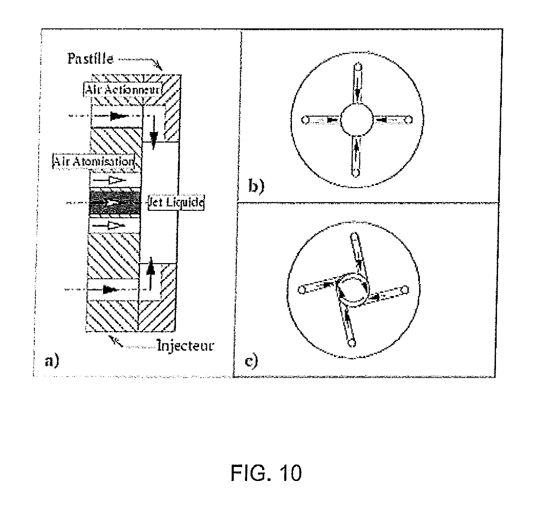

When the injection channel and the injector(s) are positioned with respect to one another in such a way that the axis of the actuating jet is secant or quasi-secant with the axis of the main jet, as shown in Figure 10b, a variation of the direction of the main jet is achieved. This is illustrated in Figure 9 in the case of a burner, whereby: 41= injection channel, 42= main jet, 45= injector, 46= actuating jet and 49= outlet of injection channel 41. XX' is the axis of the main jet without or prior to impact with an actuating jet.

When the injection channel and the injector(s) are positioned with respect to one another in such a way that the axis of the actuating jet is not coplanar with the axis of the main jet, as shown in figure 10c, a widening of the resulting main jet is obtained, i.e. an increase of the opening of the main jet.

The varying means may be configured to vary its associated said burner flame or oxidant jet such that its exit angle from its respective outlet (flame or jet outlet) is changed.

The direction of said burner flame and/or said oxidant jet may be variable progressively (continuously) and preferably linearly with respect to a control parameter.

Likewise, the opening of said burner flame and/or said oxidant jet may be variable progressively (continuously) and preferably linearly with respect to a control parameter.

Said varying means can be configured to set said direction of said burner flame and/or oxidant jet to a predetermined position or pattern of positions and/or to set said opening of said burner flame and/or oxidant jet to a predetermined value or pattern of values and to then maintain said predetermined position or pattern for at least part of a heating cycle or process. A pattern of positions is understood to be a succession in time of a number of positions. Likewise a pattern of openings is understood to be a succession in time of a number of different openings.

Said varying means may in particular be configured to vary said direction and/or said opening of said burner flame and/or oxidant jet during a heating cycle or process, of said rotatable drum, for example in such a manner as to follow a sweep pattern of said burner flame and/or said oxidant jet over the load in the furnace or over the refractory lining of said rotatable drum, in which case the burner flame and/or the oxidant jet sweep over the surface of the load in the furnace or over the surface of the refractory lining of the drum.

Said furnace may comprise at least one of open-loop or closed-loop feedback control means connected to said varying means for affecting said variation in the direction and/or opening of said burner flame and/or said oxidant jet.

The present invention also provides a method of operating a rotary furnace comprising a rotatably mounted tumbler heating drum, preferably substantially horizontal, the method including :
a) supplying into said rotatable drum a burner flame and/or an oxidant jet ; and
b) varying the direction and/or opening of said burner flame and/or of said oxidant jet with respect to a load being heated and/or with respect to a centre-line of said rotatable drum,
the furnace being preferably a furnace of the invention according to one of the embodiments described above.

The invention further provides a method of heating a load in a rotating drum of a rotary furnace, the method including :
a) injecting into said rotating drum a burner flame and/or an oxidant jet; and
b) varying the direction and/or opening of said burner flame (24) and/or of said oxidant jet (22) with respect to said load (4) and/or with respect to a centre-line of said rotating drum,
the furnace being preferably a furnace of the invention according to one of the embodiments described above.

The invention also relates to the use of a rotary furnace according to any one of the embodiments described above or a method according to any one of the described embodiments for calcining a load of granular matter or for melting a load of metal or non-metal material.

The present invention will now be described by way of example only and with reference to the accompanying drawings, in which :
Figure 1 is a longitudinal section through a rotary furnace seen in side view based on a figure in Handbook of Aluminium Recycling by Christoph Schmitz (ISBN:3802729366);
Figure 2 is a general illustration of a rotary furnace configured for granular load such as cement ;
Figure 3A represents the temperature profile within a rotary drum of a rotary furnace ;
Figure 3B represents the shift of a load within a rotary furnace under rotation during a heating cycle ;
Figure 4 represents the arrangement of Figure 3, modified by the inclusion of an optional oxidant lance;
Figures 5A and 5B illustrate the output of a burner assembly according to the present invention in a first condition and Figure 5C illustrates thermal distribution in that first condition ;
Figures 5D and 5E illustrate the output of a burner assembly according to the present invention in a second condition and Figure 5F illustrates thermal distribution in that first condition ;
Figures 6A and 6B show two operating states according to the present invention for an oxidant lance, such as the oxidant lance included in the arrangement of Figure 4 ;
Figure 7A illustrates an embodiment of the present invention viewed looking in cross-section into the drum of a rotary furnace, facing in towards the burner end of that drum and under rotation in the anti-clockwise direction "R" ;
Figure 7B illustrates a cross-section along the longitudinal axis of the drum on the line A-A of Figure 7A;
Figure 8A and Figure 8B illustrate progressive regulation of flame geometry along the length of a rotary drum during a heating cycle in accordance with the present invention, for example the rotary drum of Figures 4, 7A and 7B;
Figure 9 is a schematic representation of the variation of the direction of a main jet through the impact of an actuating jet; and
Figure 10 is a schematic representation of a burner equipped at with passages (injectors) for injecting actuating gas jets into the main jet of fuel and oxidant, whereby the configuration according to figure 10b is an embodiment whereby the passages for the actuating gas are positioned so as to allow a variation of the direction of the flame, and whereby the configuration according to figure 10c is an embodiment whereby the passages for the actuating gas are positioned so as to allow a variation of the opening of the flame.

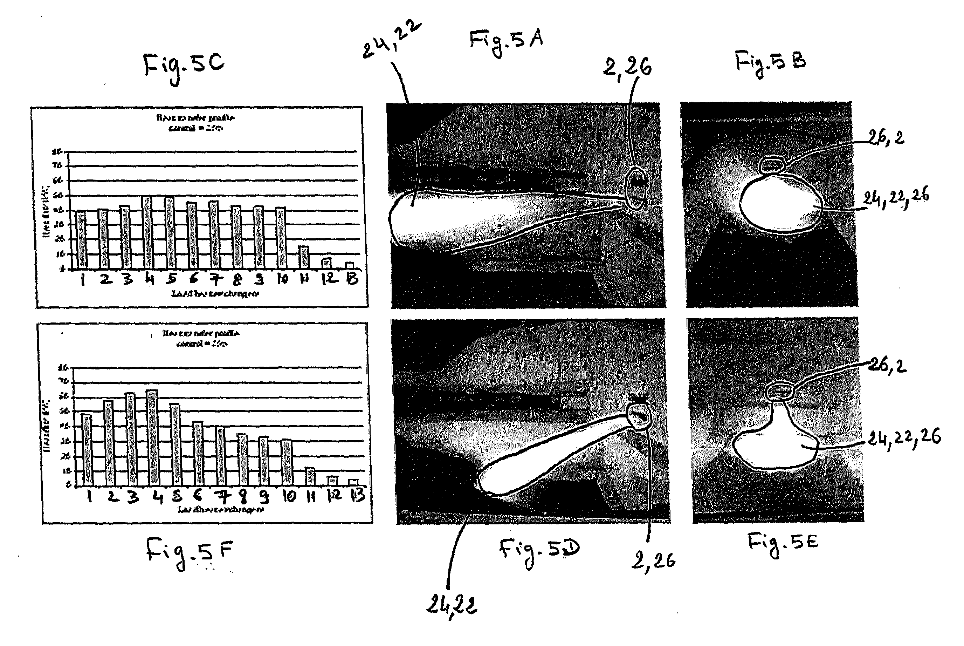

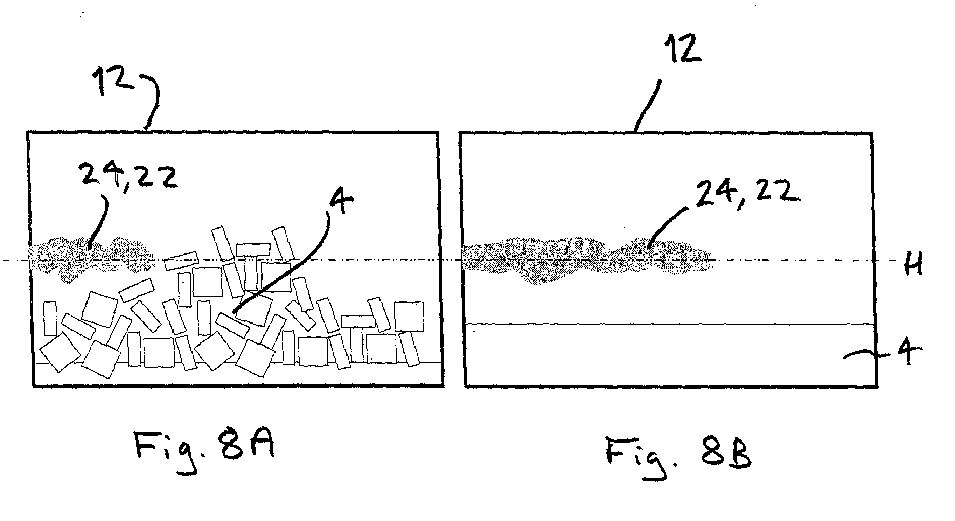

Referring further to the drawings, the present invention proposes a modification to the rotary furnaces of the general types illustrated using Figures 1 through 4, by incorporating the improvements disclosed in Figures 5A through to Figure 8B.

The burner assembly 2 in each case may optionally incorporate an oxidant lance 18. The burner outlet 20 of the burner assembly 2 should be positioned on a lateral enclosure of a rotary tumbler drum 12, 120 of the rotary furnace 10, 100. The optional oxidant lance 18 may also be installed on or near to the same enclosure, which in this case is the loading hatch 14.

For convenience, and by way of non-limiting example, this description shall continue to use the reference terms referred to above in describing the arrangement of Figure 1, leaving out further reference to the components illustrated in Figure 2. It is considered that the skilled man will appreciate how to adapt the same improvements about to be described for Figures 1, 3A, 3B and 4 to the type of installation introduced above with respect to Figure 2.

The improvement of the present invention is the provision of means to dynamically vary the direction and/or opening of a burner flame 24 and/or an oxidant jet 22. Either or both of the burner flame 24 and/or oxidant jet 22 may be dynamically interfered with such that one or both of their direction or the opening of their flame/jet is varied without changing over physical parts in the process or without mechanical means.

By variable direction is understood variation in the angle of incidence of the burner flame 24 and/or the oxidant jet 22 with respect to the drum rotation axis H and therefore towards the load 4 or towards the upper region of the rotary drum 12.

Variation in the opening of the burner flame 24 and/or oxidant jet 22 is understood as variation in its width. By varying the opening of the burner flame 24 and/or oxidant jet 22, the intensity of the heat transfer into the load 4 may also be controlled, either directly or indirectly via the flame itself and/or via the heating of the refractory lining 16 of the rotary drum 12.

The variations in the flame/oxidant jet are preferably implemented under the control of a control means 28, whether they are performed independently of one another or in unison, and may sweep the burner flame 24 and/or oxidant jet 22 over the load 4 being melted or calcined. The control means 28 may also regulate the mix between the burner flame 24 and the oxidant jet 22 so as to homogenise the transfer of energy and thus even further reduce the likelihood of forming hot-spots or of oxidising the load 4.

The benefits that are realised go beyond the reduction or even the prevention of hot-spots, but as a result lead to an increase in productivity because the present invention enables a longer operating cycle by allowing the burner 2 and/or the oxidant lance 18 to function for longer, maybe even continuously. This is a marked improvement over the intermittent operation of many current systems.

The preferred embodiment for implementing the variation in the direction/opening of the burner flame 24 and/or oxidant jet 22 is an interaction between two fluid flows to deviate the burner flame 24 and/or oxidant jet 22 as it comes out of its respective outlet opening. The deviation may be in the form a change in the angle of incidence onto the load 4 and/or onto the refractory lining 16 of the inside of the drum wall, i.e. the angle at which it is directed with respect to the burner and/or lance centreline respectively when coming out of the burner and/or lance outlet opening, which may well be co-linear with the centre-line H of the rotatable drum 12.

A preferred embodiment of this is the provision of one or more fluid actuators 26 who outlet jet is directed towards the output of their respective burner flame 24 or oxidant jet 22 such that there is an interaction therebetween.

By way of non-limiting example, Figures 5A through to 5F show such an arrangement in action for an undeviated flame. In Figure 5A is illustrated a side view of a burner flame 24 exiting a burner outlet 20 more-or-less straight down the central axis of a test chamber simulating a rotary furnace drum 12. Figure 5B shows the same condition viewed head-on to the burner flame 24. Figure 5C shows the heat transfer profile distribution (from 1 to 13) along the simulated drum, with point 1 being closest to the burner 20.

In Figures 5D to 5E, the equivalent views are illustrated for a burner flame 24 that has been deviated downwards by the action of one or more fluid jets 26. The jets 26 activated in Figures 5D through to 5F interact with the flame 24 coming out of the burner assembly 2 and deviate its direction downwards, thus redirecting it dynamically. It will be appreciated that this deviation can be achieved by applying deviating fluid jets 26 instead or in addition to the oxidant jet 22 if an oxidant lance 18 has been fitted.

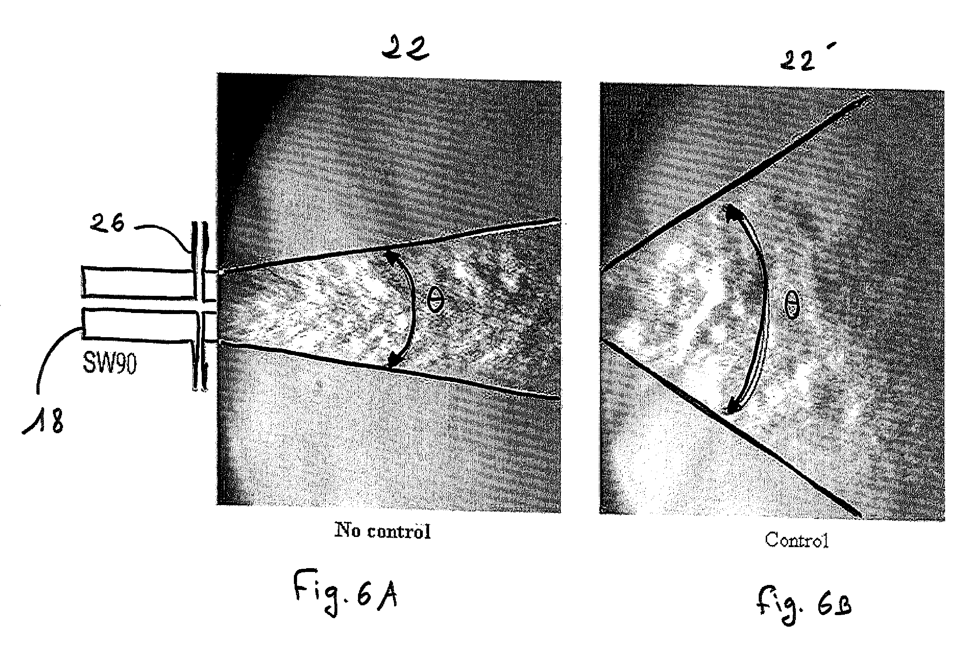

A change in the opening of the burner flame 24 and/or oxidant jet 22 may be implemented by changing its intensity or by using the fluid jets 26 to put it into rotation. Figures 6A and 6B illustrate one example of a change in opening of an oxidant jet 22 by interaction with auxiliary fluid jets 26 coming into the main flow 22 from the side at the oxidant lance 18 outlet, all under control of the control means 28 in such a manner as to widen the angle θ of the modified oxidant jet 22'. A similar variation could be applied to the burner flame 24 at the outlet 20 of the burner 2.

A particular advantage of using fluid jets 26 to vary the angle of incidence or opening of the burner flame 24 and/or the oxidant jet 22' is the absence of moving mechanical components which would, amongst other disadvantages, be difficult to maintain and unreliable in use inside a rotary furnace 10. This is particularly so when one considers the operating environment concerned, having for example such high operating temperatures and such a high level of dust.

According to the present invention, the variations in the direction/angle of incidence and/or opening of the burner flame 24 and/or oxidant jet 22 can be implemented linearly using the fluid interaction with the fluid jets 26 and in coordination with control means 28 in charge of other parameters of the burner flame 24 and/or oxidant jet 22. This is more controllable than step changes in opening and/or direction that might be achieved by physical intervention in the drum to swap nozzles on either or both of the burner assembly 2 or the oxidant lance 18.

The present invention need not necessarily be put into practice during initial construction of a rotary furnace 10. It is perfectly possible to rework a existing furnace such that the modification transforms it into a rotary furnace 10 according to the present invention. This could be done for example by adding an oxidant lance 18 into an existing rotary furnace 10 as a retrofit operation, the oxidant lance 18 being configured for a variable angle or intensity oxidant jet 22. In similar fashion, an existing rotary furnace 10 could be retro-fitted with a burner 2 according to the present invention, with or without an associated oxidant lance 18.

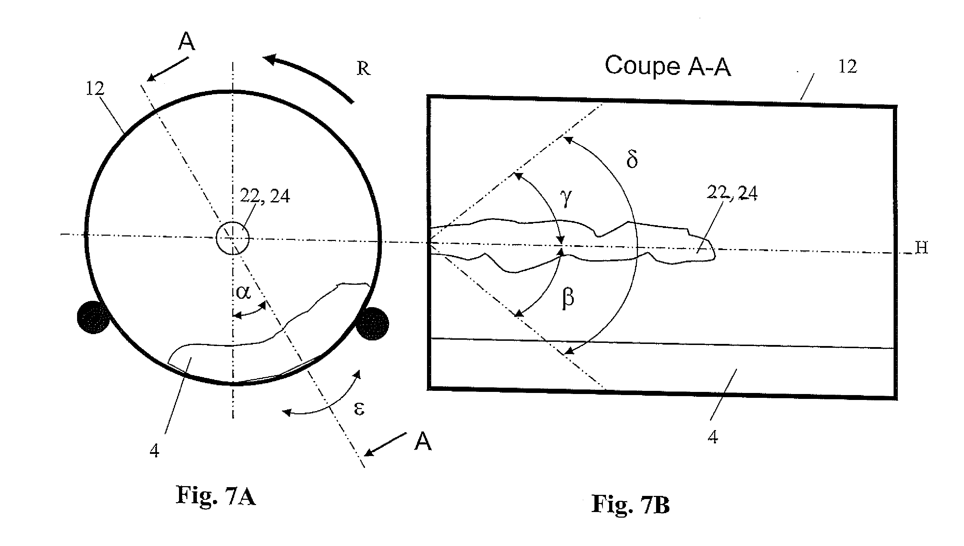

Referring for the moment in particular to Figures 7A and 7B, it is proposed that the degrees of freedom in the direction and opening/geometry of the burner flame 24 and/or oxidant jet 22 offered by the present invention can be used in at least the three following ways : static regulation, open-loop dynamic regulation and closed loop dynamic regulation. Furthermore, the regulation may be implemented radially with respect to a longitudinal axis of the drum (e.g. **α** in Figure 7A) or along a longitudinal axis of the drum (e.g. **β**, **γ** and **δ** in Figure 7B) or a combination therebetween.

The elements described herein may, for that matter, be applied to a burner 2 alone just as well as to a flame 24, 22 resulting from interaction between a burner 2 and an oxidant lance 18. In the first case, the parameters 5, 6 varied are those of burner 2 itself, and in the second case those of the lance 18. If two dynamic elements 2, 18 are installed in the same rotary furnace 12, the degrees of freedom may be varied independently of one another or in unison.

Taking first the case of static regulation, this is performed during initial installation of the equipment or following a significant change in the operating conditions. Such a change in operating conditions might be to the type of load being treated or following aging, for example erosion of the thickness of the refractory lining 16.

To implement static regulation, the inclination α and/or geometry of the burner flame 24 and/or oxidant jet 22 is optimised for a variety of conditions and the furnace operating conditions are fixed by these predetermined settings for at least part of a particular heating cycle or series of heating cycles. The settings may be changed to different ones from cycle to cycle or varied in between batches or over the lifecycle of the furnace 10 components.

By dynamic regulation is understood the variation of one or more controlled parameters during the course of a furnace production cycle. In the case of open-loop regulation, it would be typical to sweep the burner flame 24 and/or oxidant jet (or jets) 22, 22' around the interior of the furnace at a frequency related to the speed of rotation of the drum 12. Such a sweeping action would be controlled by regulating the action of the auxiliary fluid jets 26 by the open-loop control means 28.

With regard to the direction of the burner flame 24 and/or oxidant jet 22, its angle of incidence along the load 4 (β in Figure 7B or in Figure 4) or its angle of inclination (α in Figure 7A or 3B) with respect to the vertical, may be varied so as to avoid the formation of hot-spots within the load 4. The sweep will move the burner flame 24 closer to and away from the load 4 and also move it along the axis **H** of the rotary drum 12 and thereby along the length of the load 4.

A similar technique may also be used in furnaces 10 in which the flame is not directed at the load, this time represented by the variable angle γ (Figure 7). In such furnaces, the flame 24 should be swept around and/or along the refractory lining 16, so as to transfer heat evenly into the load 4 by conduction from the refractory lining 16. The amplitude of the angle γ may varied typically in such a manner as to control the amount of heat transferred into the refractory lining 16.

It can therefore be seen that it is possible, in a furnace 10 having both a burner nozzle 20 and an associated oxidant lance 18, to vary one or the other or both of the angles β and γ so as to provide maximum control over the heat input, represented in combination by the variable angle of total swing δ.

A preferred manner of varying the swing of the burner flame 24/oxidant jet 22 during a heating cycle would be to operate essentially in the zone β during the initial part of the cycles, as during that period the load 4 is still cold. Once the load has been heated to a predetermined level, the heat transfer would then be moved into the zone γ so as to avoid the formation of hot-spots in the load 4 whilst heating the refractory lining 16 and maximising heat transfer by conduction from that lining 16.

The flame 24 and/or oxidant jet 22 may also be inclined radially α with respect to the horizontal. This is particularly advantageous when the rotation of the drum 12 is such that the load 4 has a tendency to shift away from the lowest point and to climb up the drum in the direction of rotation **R**. This is represented by way of example in Figure 7A by displacement of the flame/oxidant jet over the angle α in the direction of rotation R of the drum 12, so as to better direct the flame 24, 22 onto the centre of the load 4. This variation in the direction of the flame 24, 22 may be adapted in real time to the speed of rotation of the drum 12 during a heating cycle. Again so as to reduce the chances of hot-spot formation, the radial inclination α may itself be varied by oscillation around the vertical or a nominal radial displacement, which is illustrated in Figure 7A as an oscillation over the angle of **ε** about the nominal inclination α.

Concerning the opening/geometry of the flame 24 and/or the oxidant jet 18, cyclic variations of the flame/oxidant jet length can be recommended so as to avoid concentrating the resultant flame 24, 22 onto any one region for too long and thereby reducing the chances of hot-spot formation.

Progressive variation of the burner flame 24 and/or oxidant jet 22 can also be envisaged. This may be preferable where the load 4 is introduced or augmented via the loading hatch 14, especially if that is located at the same end as the burner assembly 2. Such an example is illustrated in Figures 8A and 8B.

In the case of a rotary furnace 12 loaded via a hatch at the same (preferably slightly elevated) end as the burner assembly 2 a short burner flame 24 and/or oxidant jet 22 would be used initially, i.e. while the load 4 is still in lumps near the burner 2 (Figure 8A). The resultant flame 24, 22 could then be lengthened progressively during a cycle, as the load 4 melts and occupies the lower part of the rotary drum 12 (Figure 8B), or as it runs down the gentle slope of the drum 12 away from the burner end to occupy the far end of the rotary furnace 10 in the case of an inclined drum 12.

The dynamic variations discussed herein may also be realised under closed-loop control, that is to say that the parameters being regulated are varied in response to feedback received of their effects on the furnace conditions. Amongst the parameters that can be envisaged for such closed-loop control are the temperature of the refractory linings, the temperature of the load and the temperature of the exhaust fumes. Such feed-back could be provided by suitable sensors (not illustrated) connected to the control means 28.

A further control parameter under closed-loop control might be the composition of the exhaust fumes. For example, in a rotary furnace 12 for the fusion of aluminium, carbon monoxide and hydrogen traces in the exhaust gases are a good indicator of the oxidation of the load 4. Their presence may be used to determine the direction and/or opening of the flame 24, 22 so as to reduce the interaction between high temperature by-products of combustion and the load 4, even the temperature of the load itself. Again, such feedback could be supplied by a suitable exhaust gas composition sensor connected to the control means 28.

In each case of feed-back control (open or closed), the control means 28 would be adapted to vary parameters of the burner flame 24 and/or oxidant jet 22. For example, the control means 28 could vary the pressure of the fuel gas 5 or combustion air/oxygen 6 into the burner 2, or the pressure of the oxidant jet 22 exiting the oxidant lance 18 or the parameters of the fluid jets 26 used to selectively deviate the direction or opening of either or both of the burner flame 24 and/or the oxidant jet 22. In the case of open-loop control, the variations could be done via pre-programmed control sequences. In the case of closed-loop control, the variations could be done in response to the various sensor signals.

## Claims

1. A furnace comprising a rotatably mounted tumbler heating drum (12), preferably substantially horizontal, suitable for containing a load (4) to be heated, means for rotating said drum and a burner arrangement (2) in the region of one end of said drum for supplying a flame (24) into said drum for use in heating said load, said burner arrangement comprising a burner (20) and/or an oxidant lance (18), **characterized in that** said burner arrangement (2) further comprises means (26, 28) for varying in use the direction and/or opening of a burner flame (24) produced by the burner and/or of an oxidant jet (22) produced by the oxidant lance (18).

2. A furnace according to claim 1, wherein the direction of said burner flame (24) and/or oxidant jet (22) is variable in use along the length of said rotatable drum (12) and/or radially within said rotatable drum (12).

3. A furnace according to any preceding claim, wherein the burner injects a main jet of fuel, of oxidant or of a mixture of fuel and oxidant for combustion and wherein said varying means comprises fluid jets (26) configured to impact said main jet so as to vary the direction and/or opening of said main jet and thereby of said burner flame (24).

4. A furnace according to any preceding claim, wherein the varying means comprises fluid jets (26) configured to impact the oxidant jet so as to vary the direction and/or opening of said oxidant jet (22).

5. A furnace according to any preceding claim, wherein the direction of said burner flame (24) and/or said oxidant jet (22) is variable progressively and preferably linearly with respect to a control parameter.

6. A furnace according to any preceding claim, wherein the opening of said burner flame (24) and/or said oxidant jet (22) is variable progressively and preferably linearly with respect to a control parameter.

7. A furnace according to any preceding claim, wherein said varying means is configured to set said direction of said burner flame and/or oxidant jet to a predetermined position or pattern of positions and/or to set said opening of said burner flame (24) and/or oxidant jet (22) to a predetermined value or pattern of values and to then maintain said predetermined position or pattern for at least part of a heating cycle or process.

8. A furnace according to any preceding claim, wherein said varying means (26, 28) is configured to vary said direction and/or said opening of said burner flame (24) and/or oxidant jet (22) during a heating cycle or process in such a manner as to follow a sweep pattern of said burner flame (24) and/or said oxidant jet (22) over the load (4) or over a refractory lining (16) of said rotatable drum.

9. A furnace according to any preceding claim, further comprising at least one of open-loop or closed-loop feedback control means connected to said varying means (26, 28) for affecting said variation in the direction and/or opening of said burner flame (24) and/or said oxidant jet (22).

10. A method of operating a rotary furnace comprising a rotatably mounted tumbler heating drum (12), preferably substantially horizontal, the method including :
a) supplying into said rotatable drum (12) a burner flame (24) and/or an oxidant jet (22) ; and
b) varying the direction and/or opening of said burner flame (24) and/or of said oxidant jet (22) with respect to a load (4) being heated and/or with respect to a centre-line of said rotatable drum.

11. A method according to claim 10, whereby the rotary furnace is a furnace according to any one of claims 1 to 9

12. A method of heating a load in a rotating drum of a rotary furnace, the method including :
a) injecting into said rotating drum (12) a burner flame (24) and/or an oxidant jet (22) ; and
b) varying the direction and/or opening of said burner flame (24) and/or of said oxidant jet (22) with respect to said load (4) and/or with respect to a centre-line of said rotating drum.

13. A method according to claim 12, whereby the rotary furnace is a rotary furnace according to any one of claims 1 to 9.

14. Use of a rotary furnace according to any one of claims 1 to 9 or of a method according to any one of claims 10 to 13, for calcining a load of granular matter or for melting a load of metal or non-metal material.
